# EUROPEAN PATENT SPECIFICATION

(11) **EP 1 459 630 B1**
(45) Date of publication and mention of the grant of the patent: **08.02.2012**
(21) Application number: 02793459.5
(22) Date of filing: 27.12.2002
(51) Int. Cl.: A01N 57/20, A01N 25/12, A01N 47/36, A01N 47/30, A01N 43/70, A01N 43/707, A01N 43/54, A01N 39/04, A01N 43/40, A01N 43/82, A01N 43/653

(54) **MIXED FINE GRAINS CONTAINING GLYPHOSATE**
GLYPHOSATEHALTIGES FEINES MISCHGRANULAT
GRAINS FINS MELANGES CONTENANT DU GLYPHOSATE

(30) Priority: 27.12.2001 JP 2001403033
(43) Date of publication of application: 22.09.2004
(73) Proprietor: Sumitomo Chemical Company, Limited, Tokyo 104-8260 (JP); Bayer CropScience K.K., Tokyo 100-8262 (JP)
(72) Inventor: KAWADA, Hiroshi, Tokyo 103-0004 (JP); KIKUTA, Masaji, Tsukuba-shi, Ibaraki 305-0841 (JP); YOSHIDA, Ruriko, Tsukuba-shi, Ibaraki 305-0841 (JP); TADENUMA, Y., Inashiki-gun Ibaraki 300-1152 (JP)
(74) Representative: Hartz, Nikolai
(86) International application number: PCT/JP2002/013847
(87) International publication number: WO 2003/055313

(56) References cited:
- EP-A1- 0 378 985
- EP-A1- 0 387 165
- EP-A1- 0 585 210
- WO-A1-00/08940
- WO-A1-00/08940
- WO-A1-98/09525
- WO-A1-99/51099
- JP-A- 5 271 021
- JP-A- 62 175 408
- DATABASE CA CHEMICAL ABSTRACTS SERVICE, COLUMBUS, OHIO, US; 9 January 1988 (1988-01-09), XP002571263 Database accession no. 108:2163 & JP 06 078204 B (HOECHST AG) 5 October 1994 (1994-10-05) -& DATABASE WPI Week 198735 Thomson Scientific, London, GB; AN 1987-246956 XP002571264 -& JP 62 169702 A (HOECHST AG) 25 July 1987 (1987-07-25)
- DATABASE WPI Week 199832 Thomson Scientific, London, GB; AN 1998-364916 XP002571265 & ES 2 116 176 A1 (AGRIDES SA) 1 July 1998 (1998-07-01) -& DATABASE EPODOC EUROPEAN PATENT OFFICE, THE HAGUE, NL; 1998, XP002571266 & ES 2 116 176 A1 (AGRIDES S A [ES]) 1 July 1998 (1998-07-01)
- DATABASE WPI Week 200113 Thomson Scientific, London, GB; AN 2001-113038 XP002571267 & CN 1 146 280 A (AGRIC CHEM FACTORY PINGLE COUNTY GUANGXI) 2 April 1997 (1997-04-02)
- DATABASE WPI Week 200145 Thomson Scientific, London, GB; AN 2001-418780 XP002571268 & CN 1 292 996 A (WU Y) 2 May 2001 (2001-05-02)

## Description

### TECHNICAL FIELD

The present invention relates to a technique to effectively control useless and noxious weeds growing in the living environment.

### BACKGROUND ART

Exuberance of weeds brings about a decrease in yield of agricultural products or deterioration of the living environment irrespective of in an agricultural field or in a non-agricultural field. Herbicides are widely used to cope with such problems. Among them, an inexpensive liquid formulation of N-(phosphonomethyl)glycinate salt (hereinafter referred to as glyphosate) such as an isopropylamine salt, a sodium salt, a trimesium salt, or an ammonium salt, is very widely used from such characteristics that it has high herbicidal effects against most plants, and when applied to soil, it will be readily decomposed or adsorbed by soil, and soon after the application thereof, new plants may be planted.

Further, in home gardening or the like, as a formulation which can conveniently be used, a dilute glyphosate liquid formulation which can be applied as it is, or triclopyr butoxyethyl ester or diuron formed into fine granule, is applied to foliage. JP-B-6-78204 discloses that glyphosate is added together with an adhesion aid to a mineral such as attapulgite and used as fine granule.

WO98/09525 discloses combinations of glyphosate with other herbicides.

When a liquid formulation is used by a general consumer who has little experience or knowledge about the method of using the agricultural chemical, not only a trouble of diluting it will be required, but also the dilution rate or the dosage on application may likely be erred to cause phytotoxicity to nearby crop plants or to increase an environmental load due to excessive application. As a method to solve such a problem, with respect to a chemical which can be formed into a liquid formulation, a technique of direct application in the form of a diluted liquid formulation has been utilized not only for an insecticide but also for a herbicide. However, the diluted liquid formulation has had a drawback that the transportation cost or the storage cost is thereby substantially increased, since the application dose per unit area will be directly put on the distribution channel.

On the other hand, a method of using it in the form of a granule is advantageous in that the weight of the formulation to be applied can be reduced to a level of about one tenth of that in application of the diluted liquid formulation, and the application is also simple. However, most of the chemicals to be used in the form of granules of from 0.3 to 1.7 mm, are usually hardly absorbed from foliage. Further, even if glyphosate which is effective only when absorbed from foliage, is granulated and applied in the form of a granule, it shows no substantial effectiveness. As shown in JP-B-6-78204, it has been studied to formulate a fine granule by adding glyphosate together with an adhesion aid to a mineral such as attapulgite, thereby to improve the deposition efficiency on the foliage of plants to promote the development of the effectiveness. However, it has been difficult to obtain a stabilized effect, since the deposit of the chemical on the foliage is likely to be reduced substantially depending upon the climate conditions, such as in a case where wind is strong or in a case where the atmosphere is extremely dry. Therefore, there has been no practical case wherein a fine granule of glyphosate has been practically used.

### DISCLOSURE OF THE INVENTION

The present invention provides a herbicide obtained by blending to an N-(phosphonomethyl)glycinate salt, one or two members selected from the group consisting of isouron (ISO name: isouron), karbutilate (ISO name: karbutilate), diuron (ISO name: diuron), tebuthiuron (ISO name: tebuthiuron), linuron (ISO name: linuron), cyanazine (ISO name: cyanazine), prometryn (ISO name: prometryn), metribuzin (ISO name: metribuzin), terbacil (ISO name: terbacil) and bromacil (ISO name: bromacil), as a photosynthesis-inhibiting herbicide (Group A); one or two members selected from the group consisting of 2,4-D (ISO name: 2,4-D), MCPA (ISO name: MCPA), mecoprop (ISO name: mecoprop), triclopyr (ISO name: triclopyr) and triclopyr butoxyethyl ester, as a phytohormone herbicide (Group B); one or two members selected from the group consisting of oxadiargyl (ISO name: oxadiargyl), carfentrazone-ethyl (ISO name: carfentrazone-ethyl), flumioxazin (ISO name: flumioxazin) and pyraflufen-ethyl (ISO name: pyraflufen-ethyl), as a protoporphyrinogen oxidase-inhibiting herbicide (Group C); one or two members selected from the group consisting of glufosinate ammonium (ISO name: glufosinate-ammonium), diflufenican (ISO name: diflufenican), dichlobenil (ISO name: dichlobenil) and chlorthiamid (ISO name: chlorthiamid), as other herbicide (Group D); or one member selected from each of two Groups among (Group A), (Group B), (Group C) and (Group D); preferably adding an adhesion aid, and depositing the blend on a mineral carrier having a grain size distribution of from 0.1 to 0.3 mm. By application of such a herbicide to the foliage of weeds, it has been made possible to simplify the treatment and at the same time to provide a stable herbicidal effect irrespective of the climate conditions.

Thus, according to the present invention, by blending to glyphosate which exhibits a herbicidal effect only when absorbed from the foliage and which shows no effect by soil treatment, not only a chemical showing the effect when absorbed from the foliage, but also a chemical which exhibits a high effect by soil treatment, may be mixed, followed by fine pulverization, it is possible to increase the deposit on the foliage. The increase of the deposit on the foliage promotes the absorption of the chemical from the foliage and serves to stabilize the effect. At the same time, depending upon the selection of the chemical to be mixed, the slow development of the effect which used to be a drawback of the glyphosate, can be improved, and it becomes possible to provide a quick acting effect.

Further, in the case of a fine granule mixed with a chemical having a soil treatment effect, even if it fails to deposit on the foliage and falls on soil, it provides the inherent soil treatment effect to bring about a further stability of the effect.

By adding such effects, the drawback of the known glyphosate fine granule, such as the decrease in the effect due to a climate change such as an extremely dried state, strong wind or strong rain, can be overcome.

### EMBODIMENTS OF THE INVENTION

The amount of glyphosate to be deposited on grains of the mineral carrier is preferably from 0.5% to 10% (by weight, the same applies hereinafter unless otherwise specified) based on the grains. If the amount is smaller than the lower limit, the effect tends to decrease, and if it exceeds the upper limit, such is useless, since the deposit to plant bodies is limited. The above-mentioned other herbicides to be blended are preferably from 0.01% to 3%, based on the amount of glyphosate.

In the production, a solid chemical may be finely pulverized and used as it is, or it may be used as dissolved in a solvent which can easily and safely be recovered. A liquid chemical such as glyphosate may be deposited as it is on a granular inorganic substance. Further, an adhesion aid may be used in combination to supplement the adhesion of the chemical or to promote the absorption from the foliage, of the chemical applied.

As such an adhesion aid, a high boiling point watersoluble solvent or a surfactant, such as ethylene glycol, propylene glycol, polyethylene glycol, polypropylene glycol, propylene glycol monomethyl ether, polyvinyl alcohol, polyvinyl pyrrolidone, a polyoxyethylene alkyl phenyl ether, a polyoxyethylene alkyl ether, a dialkyl sulfosuccinate, an alkylsulfonate, an alkylbenzenesulfonate, laurylsulfate, a polyoxyethylene alkylarylsulfate or a polyoxyethylene alkyl ether phosphate, may be used in combination. These adhesion aids may be used alone or as mixed. The total amount thereof is preferably from 0.5 to 10%, based on the total weight of the herbicide.

The granular inorganic substance to be used here may, for example, be zeolite, limestone, olivine, pumice, diatomaceous earth, calcined diatomaceous earth, bentonite, attapulgite or silica sand. However, it is not limited thereto, and any mineral may be used so long as it is a mineral which is free from breakage in the granular form and which has a nature capable of readily releasing a chemical from the grain surface. Such a carrier is used by adjusting the grain size so that the grain size distribution will be from 0.1 to 0.3 mm.

Referring to a specific production method, while stirring a selected finely granular mineral, a dissolved chemical or a suspended chemical and an adhesion aid are gradually added or blown and mixed thereto. After the mixing, in a case where a low boiling point solvent is used, it is removed, followed by drying and sieving to obtain grains of from about 0.1 to 0.3 mm as the product.

Further, when the grains having the chemical deposited tend to undergo caking, a small amount of a porous inorganic substance such as inorganic silicic acid or the like, may be added to prevent caking.

### EXAMPLES

Now, embodiments of the present invention will be described with reference to Formulation Examples and Test Examples for biological effectiveness.

### FORMULATION EXAMPLE 1

### Preparation of 2% glyphosate and 1% isouron mixed fine granule

871 g of fine granular zeolite (Zeogreen fine granule No. 8, tradename of Nihon Zeolite Co., Ltd.) was charged in a speed kneader tank, and while rotating rotary vanes at a rotational speed of about 350 rpm, 49 g of 41% glyphosate isopropylamine salt liquid formulation (Roundup, tradename of Monsanto Japan Limited) was slowly added. Then, 10 g of isouron pulverized to at most 100 µm was slowly added. Then, a mixed liquid consisting of 20 g of dioctyl sulfosuccinate (Aerol CT-1, tradename of TOHO Chemical Industry Co. LTD.) and 30 g of ethylene glycol, was dropwise added. Then, 20 g of porous silicic acid (Carplex #80D, tradename of Shionogi & Co., Ltd.) was added, followed by stirring for 5 minutes, and then grains smaller or larger than from 0.1 to 0.3 mm were removed to obtain 951 g of the desired fine granule.

### FORMULATION EXAMPLE 2

### Preparation of 2% glyphosate and 0.7% metribuzin mixed fine granule

854 g of fine granular zeolite was charged into a speed kneader tank, and while rotating rotary vanes at about 350 rpm, 49 g of a 41% glyphosate isopropylamine salt liquid formulation was slowly added. Then, 7 g of metribuzin pulverized to at most 100 µm was slowly added. Then, a mixed liquid consisting of 30 g of polyoxyethylene octylphenyl ether (Nonal 109, tradename of TOHO Chemical Industry Co. LTD.) and 30 g of ethylene glycol, was dropwise added. Then, 30 g of porous silicic acid was added, followed by stirring for 5 minutes, and then grains smaller or larger than from 0.1 to 0.3 mm were removed to obtain 968 g of the desired fine granule.

### FORMULATION EXAMPLE 3

### Preparation of 2% glyphosate and 1% terbacil mixed fine granule

341 g of fine granular zeolite and 500 g of fine granular calcium carbonate (calcium carbonate fine granule #50150, tradename of Nitto Funka K.K.) were charged into a speed kneader tank, and while rotating rotary vanes at about 350 rpm, 49 g of a 41% glyphosate isopropylamine salt liquid formulation was slowly added. Then, 10 g of terbacil pulverized to at most 100 µm was slowly added. Then, a mixed liquid consisting of 30 g of sodium dodecylbenzenesulfonate (Neopelex F-25, tradename of Kao Corporation) and 30 g of polyethylene glycol, was dropwise added. Then, 40 g of porous silicic acid was added, followed by stirring for 5 minutes, and then, grains smaller or larger than from 0.1 to 0.3 mm were removed to obtain 961 g of the desired fine granule.

### FORMULATION EXAMPLE 4

### Preparation of 2% glyphosate and 0.5% triclopyr butoxyethyl ester mixed fine granule

866 g of fine granular zeolite was charged into a speed kneader tank, and while rotating rotary vanes at about 350 rpm, 49 g of a 41% glyphosate isopropylamine salt liquid formulation was gradually added. Then, a mixture consisting of 5 g of triclopyr butoxyethyl ester (Zytron ester, tradename of Dow Chemical Nippon K.K.), and 30 g of propylene glycol, was slowly added. Then, 20 g of dioctyl sulfosuccinate was dropwise added. Then, 30 g of porous silicic acid was added, followed by stirring for 5 minutes, and then, grains smaller or larger than from 0.1 to 0.3 mm were removed to obtain 970 g of the desired fine granule.

### FORMULATION EXAMPLE 5

### Preparation of 2% glyphosate, 0.25% of oxadiargyl and 0.05% of diflufenican mixed fine granule

858.5 g of fine granular zeolite was charged into a speed kneader tank, and while rotating rotary vanes at about 350 rpm, 49 g of a 41% glyphosate isopropylamine salt liquid formulation was gradually added. Then, 25 g of a 10% oxadiargyl acetone solution and 10 g of one having a 50% diflufenican suspension diluted 10 times with water, were slowly added. Then, a mixed liquid consisting of 20 g of polyoxyethylene nonylphenyl ether (Emulgen 911, tradename of Kao Corporation), 20 g of propylene glycol monomethyl ether and 20 g of propylene glycol, was dropwise added. Then, 20 g of porous silicic acid was added, followed by stirring for 5 minutes, and then, grains smaller or larger than from 0.1 to 0.3 mm were removed to obtain 959 g of the desired fine granule.

### FORMULATION EXAMPLE 6

### Preparation of 2% glyphosate and 2% chlorthiamid mixed fine granule

861 g of fine granular zeolite was charged into a speed kneader tank, and while rotating rotary vanes at about 350 rpm, 49 g of a 41% glyphosate isopropylamine salt liquid formulation was slowly added. Then, 20 g of chlorthiamid pulverized to at most 100 µm was slowly added. Then, a mixed liquid consisting of 20 g of sodium dodecylbenzenesulfonate and 30 g of ethylene glycol, was dropwise added. Then, 20 g of porous silicic acid was added, followed by stirring for 5 minutes, and then, grains smaller or larger than from 0.1 to 0.3 mm were removed to obtain 963 g of the desired fine granule.

### FORMULATION EXAMPLE 7

### Preparation of 5% glyphosate and 0.5% ammonium glufosinate mixed fine granule

781 g of fine granular zeolite was charged into a speed kneader tank, and while rotating rotary vanes at about 350 rpm, 122 g of a 41% glyphosate isopropylamine salt liquid formulation was gradually added. Then, 27 g of 18.5% ammonium glufosinate (Basta, tradename of Aventis Crop Science Shionogi K.K.) was slowly added. Then, 30 g of propylene glycol was dropwise added, and further, 40 g of porous silicic acid was added, followed by stirring for 5 minutes. Then, grains smaller or larger than from 0.1 to 0.3 mm were removed to obtain 958 g of the desired fine granule.

### COMPARATIVE FORMULATION EXAMPLE

### Preparation of a 2% glyphosate fine granule

881 g of fine granular zeolite was charged into a speed kneader tank, and while rotating rotary vanes at about 350 rpm, 49 g of a 41% glyphosate isopropylamine liquid formulation was slowly added. Then, a mixed liquid consisting of 20 g of polyoxyethylene nonylphenyl ether and 30 g of ethylene glycol, was dropwise added. Then, 20 g of porous silicic acid was added, followed by stirring for 5 minutes, and then grains smaller or larger than from 0.1 to 0.3 mm were removed to obtain 965 g of the desired fine granule.

The herbicidal effects against plants, of the above Formulation Examples 1 to 7 and Comparative Formulation Example, were compared and studied in pots and in fields.

### TEST EXAMPLE 1

### Pot Test 1

- Test period:: July 9 to July 30, 2000
- Test site:: Glass chamber in Tsukuba Bunshitsu,
Hodogaya Agros Corporation
- Test plants:: Crabgrass (Digitaria adscendens)
Leaf age: 5.5
Plant height: 20 to 30 cm
Greenfoxtail Setaria viridis)
Leaf age: 5
Plant height: 28 to 35 cm
Slender amaranth (Amaranthus viridis)
Leaf age: 4 to 4.5
Plant height: 6 to 10 cm
Common lambsquater (Chenopodium album)
Leaf age: 5
Plant height: 4 to 8 cm
Common cocklebur (Xanthium strumarium)
Leaf age: 5.3
Plant height: 14 to 20 cm
- Test scale:: 180 cm² pot, no repetition
- Date of treatment:: July 9, 2000
- Test method:: The leaf surface of the test plant was wetted by an atomist spray, and each fine granule was applied on the leaf surface in an amount corresponding to 10 or 20 g/m².
- Dates of investigation:: July 16, and July 30, 2000
- Test results:: Shown in Table 1.

**Table 1**

| Tested formulation | Dose g/m² | Crab-grass | | Green-foxtail | | Slender amaranth | | Common lambs-quater | | common cocklebur | |
|---|---|---|---|---|---|---|---|---|---|---|---|
| Formulation Example 1 | 10 | 1 | 8 | 1 | 8 | 1 | 8 | 1 | 9 | 1 | 9 |
| | 20 | 2 | 10 | 2 | 9 | 3 | 10 | 3 | 10 | 2 | 10 |
| Formulation Example 2 | 10 | 3 | 9 | 1 | 8 | 3 | 10 | 3 | 10 | 2 | 10 |
| | 20 | 4 | 10 | 2 | 10 | 4 | 10 | 4 | 10 | 3 | 10 |
| Formulation Example 3 | 10 | 0 | 8 | 0 | 9 | 1 | 9 | 1 | 8 | 1 | 9 |
| | 20 | 1 | 9 | 1 | 10 | 1 | 10 | 1 | 10 | 1 | 9 |
| Formulation Example 4 | 10 | 1 | 8 | 1 | 7 | 7 | 8 | 6 | 9 | 6 | 9 |
| | 20 | 3 | 10 | 3 | 9 | 8 | 10 | 8 | 10 | 7 | 10 |
| Formulation Example 5 | 10 | 4 | 9 | 3 | 7 | 4 | 8 | 5 | 9 | 4 | 9 |
| | 20 | 6 | 10 | 6 | 9 | 7 | 10 | 7 | 10 | 6 | 9 |
| Formulation Example 6 | 10 | 0 | 8 | 0 | 7 | 0 | 8 | 0 | 8 | 1 | 8 |
| | 20 | 1 | 9 | 1 | 9 | 1 | 10 | 1 | 9 | 1 | 9 |
| Formulation Example 7 | 10 | 6 | 9 | 5 | 9 | 7 | 9 | 7 | 10 | 6 | 8 |
| | 20 | 8 | 10 | 7 | 10 | 8 | 10 | 8 | 10 | 8 | 10 |
| Comparative Formulation Example | 10 | 0 | 7 | 0 | 6 | 0 | 7 | 0 | 7 | 0 | 8 |
| | 20 | 1 | 8 | 0 | 8 | 1 | 8 | 1 | 9 | 0 | 9 |

| | | | | | | | | | | | |
|---|---|---|---|---|---|---|---|---|---|---|---|
| *Investigation Left: After 7 days from treatment, Right: After 21 days from treatment *Evaluation 0: No effect to 10: Completely withered | | | | | | | | | | | |

### TEST EXAMPLE 2

### Pot Test 2

- Test period:: July 9 to July 30, 2000
- Test site:: Glass chamber in Tsukuba Bunshitsu,
Hodogaya Agros Corporation
- Test plants:: Crabgrass (Digitaria adscendens)
Leaf age: 5.5
Plant height: 20 to 30 cm
Greenfoxtail (Setaria viridis)
Leaf age: 5
Plant height: 28 to 35 cm
Slender amaranth (Amaranthus viridis)
Leaf age: 4 to 4.5
Plant height: 6 to 10 cm
Common lambsquater (Chenopodium album)
Leaf age: 5
Plant height: 4 to 8 cm
Common cocklebur (Xanthium strumarium)
Leaf age: 5.3
Plant height: 14 to 20 cm
- Test scale:: 180 cm² pot, no repetition
- Date of treatment:: July 9, 2000
- Test method:: Each fine granule was applied on the leaf surface of the test plant in an amount corresponding to 10 or 20 g/m².
- Dates of investigation:: July 16, and July 30, 2000
- Test results:: Shown in Table 2.

**Table 2**

| Tested formulation | Dose g/m² | Crab-grass | | Green-foxtail | | Slender amaranth | | Common lambs-quater | | common cocklebur | |
|---|---|---|---|---|---|---|---|---|---|---|---|
| Formulation Example 1 | 10 | 0 | 6 | 0 | 6 | 1 | 7 | 1 | 7 | 0 | 7 |
| | 20 | 1 | 9 | 1 | 8 | 1 | 9 | 1 | 9 | 2 | 9 |
| Formulation Example 2 | 10 | 1 | 8 | 0 | 7 | 2 | 8 | 1 | 8 | 1 | 8 |
| | 20 | 3 | 9 | 1 | 9 | 3 | 9 | 2 | 9 | 2 | 9 |
| Formulation Example 3 | 10 | 0 | 7 | 0 | 6 | 1 | 8 | 1 | 7 | 1 | 8 |
| | 20 | 1 | 9 | 1 | 9 | 1 | 9 | 1 | 9 | 1 | 9 |
| Formulation Example 4 | 10 | 0 | 5 | 0 | 4 | 3 | 8 | 3 | 8 | 3 | 8 |
| | 20 | 1 | 7 | 0 | 6 | 5 | 10 | 4 | 10 | 4 | 9 |
| Formulation Example 5 | 10 | 3 | 7 | 2 | 6 | 3 | 8 | 2 | 7 | 2 | 7 |
| | 20 | 4 | 9 | 3 | 8 | 5 | 9 | 5 | 8 | 3 | 8 |
| Formulation Example 6 | 10 | 0 | 5 | 0 | 5 | 0 | 5 | 0 | 4 | 0 | 4 |
| | 20 | 1 | 8 | 0 | 8 | 1 | 8 | 1 | 8 | 1 | 7 |
| Formulation Example 7 | 10 | 2 | 5 | 1 | 4 | 3 | 6 | 2 | 6 | 2 | 6 |
| | 20 | 3 | 7 | 3 | 6 | 4 | 7 | 4 | 7 | 4 | 7 |
| Comparative Formulation Example | 10 | 0 | 3 | 0 | 4 | 0 | 4 | 0 | 3 | 0 | 2 |
| | 20 | 0 | 5 | 0 | 5 | 0 | 6 | 0 | 5 | 0 | 4 |

| | | | | | | | | | | | |
|---|---|---|---|---|---|---|---|---|---|---|---|
| *Investigation Left: After 7 days from treatment, Right: After 21 days from treatment *Evaluation 0: No effect to 10: Completely withered | | | | | | | | | | | |

### TEST EXAMPLE 3

### Field test

- Test period:: June 16 to August 20, 2001
- Test site:: Within Shimozuma Hosenku, Kanto Railway
- Test plants:: Crabgrass (Digitaria adscendens)
Plant height: 20 to 30 cm
Greenfoxtail (Setaria viridis)
Plant height: 20 to 30 cm
Tall Goldenrod (Solidago altissima)
Plant height: 30 to 40 cm
Common horsetail (Equisetum arvense)
Plant height: 15 to 20 cm
Common chickweed (Stellaria media)
Plant height: 15 to 20 cm
- Test scale:: 10 m²/section, repeated twice
- Date of treatment:: June 16, 2001
- Test method:: After three weeks from mowing, in the morning after a rainy day, each fine granule was applied at a dose of 20 g/m² on the foliage.
- Dates of investigation:: June 23 and July 16, 2001
- Test results:: Shown in Table 3.

**Table 3**

| Tested formulation | Dose g/m² | Crab-grass | | Green foxtail | | Tall Golden-rod | | Common horsetail | | common chickweed | |
|---|---|---|---|---|---|---|---|---|---|---|---|
| Formulation Example 1 | 20 | 3 | 10 | 2 | 10 | 3 | 9 | 3 | 9 | 3 | 10 |
| Formulation Example 2 | 20 | 4 | 10 | 3 | 9 | 4 | 10 | 4 | 9 | 5 | 10 |
| Formulation Example 3 | 20 | 2 | 9 | 2 | 8 | 3 | 9 | 3 | 9 | 3 | 10 |
| Formulation Example 4 | 20 | 5 | 9 | 4 | 9 | 6 | 10 | 6 | 10 | 8 | 10 |
| Formulation Example 5 | 20 | 2 | 9 | 2 | 9 | 3 | 10 | 3 | 9 | 4 | 10 |
| Formulation Example 6 | 20 | 2 | 8 | 2 | 10 | 3 | 9 | 4 | 9 | 4 | 10 |
| Formulation Example 7 | 20 | 7 | 9 | 7 | 9 | 8 | 9 | 6 | 9 | 8 | 10 |
| Comparative Formulation Example | 20 | 1 | 6 | 0 | 5 | 1 | 7 | 0 | 1 | 1 | 8 |

| | | | | | | | | | | | |
|---|---|---|---|---|---|---|---|---|---|---|---|
| *Investigation Left: After 7 days from treatment, Right: After 21 days from treatment *Evaluation 0: No effect to 10: Completely withered | | | | | | | | | | | |

As is evident from the foregoing Test Examples, the fine granule prepared by using glyphosate alone will have its deposition on the foliage limited by a climate condition such as humidity, whereby its effect deteriorates. On the other hand, according to the present invention, a finely granulated chemical which is mainly used for soil treatment is blended to glyphosate and formed into a fine granule, whereby the deterioration of the effect of glyphosate due to a change of the climate, can be prevented.

### INDUSTRIAL APPLICABILITY

The change in the effect of the glyphosate fine granule due to the climate conditions, can be avoided.

## Claims

1. A herbicide obtained by blending one or two members selected from the group consisting of isouron (ISO name: isouron), karbutilate (ISO name: karbutilate), diuron (ISO name: diuron), tebuthiuron (ISO name: tebuthiuron), linuron (ISO name: linuron), cyanazine (ISO name: cyanazine), prometryn (ISO name: prometryn), metribuzin (ISO name: metribuzin), terbacil (ISO name: terbacil) and bromacil (ISO name: bromacil), as a photosynthesis-inhibiting herbicide (Group A), to an N-(phosphonomethyl)glycinate salt, and depositing the blend on a mineral carrier having a grain size distribution of from 0.1 to 0.3 mm.

2. A herbicide obtained by blending one or two members selected from the group consisting of 2,4-D (ISO name: 2,4-D), MCPA (ISO name: MCPA), mecoprop (ISO name: mecoprop), triclopyr (ISO name: triclopyr) and their salts and esters, as a phytohormone herbicide (Group B), to an N-(phosphonomethyl)glycinate salt, and depositing the blend on a mineral carrier having a grain size distribution of from 0.1 to 0.3 mm.

3. A herbicide obtained by blending one or two members selected from the group consisting of oxadiargyl (ISO name: oxadiargyl), carfentrazone-ethyl (ISO name: carfentrazone-ethyl), flumioxazin (ISO name: flumioxazin) and pyraflufen-ethyl (ISO name: pyraflufen-ethyl), as a protoporphyrinogen oxidase-inhibiting herbicide (Group C), to an N-(phosphonomethyl)glycinate salt, and depositing the blend on a mineral carrier having a grain size distribution of from 0.1 to 0.3 mm.

4. A herbicide obtained by blending one or two members selected from the group consisting of glufosinate (ISO name: glufosinate-ammonium), diflufenican (ISO name: diflufenican), dichlobenil (ISO name: dichlobenil) and chlorthiamid (ISO name: chlorthiamid), as other herbicide (Group D), to an N-(phosphonomethyl)glycinate salt, and depositing the blend on a mineral carrier having a grain size distribution of from 0.1 to 0.3 mm.

5. A herbicide obtained by blending one member selected from each of two Groups among (Group A), (Group B), (Group C) and (Group D) to an N-(phosphonomethyl)glycinate salt, and depositing the blend on a mineral carrier having a grain size distribution of from 0.1 to 0.3 mm.

6. The herbicide according to Claim 1, 2, 3, 4 or 5, which contains an adhesion aid.

## Patentansprüche

1. Herbizid, erhalten durch Mischen von einem oder zwei Mitgliedern ausgewählt aus der Gruppe bestehend aus Isouron (ISO-Name: isouron), Karbutilat (ISO-Name: karbutilate), Diuron (ISO-Name: diuron), Tebuthiuron (ISO-Name: tebuthiuron), Linuron (ISO-Name: linuron), Cyanazin (ISO-Name: cyanazine), Prometryn (ISO-Name: prometryn), Metribuzin (ISO-Name: metribuzin), Terbacil (ISO-Name: terbacil) und Bromacil (ISO-Name: bromacil), als ein Photosynthese-hemmendes Herbizid (Gruppe A) mit einem N-(Phosphonomethyl)glycinat-Salz und Ablagern der Mischung auf einem mineralischen Träger mit einer Korngrößenverteilung von 0,1 bis 0,3 mm.

2. Herbizid, erhalten durch Mischen von einem oder zwei Mitgliedern ausgewählt aus der Gruppe bestehend aus 2,4-D (ISO-Name: 2,4-D), MCPA (ISO-Name: MCPA), Mecoprop (ISO-Name: mecoprop), Triclopyr (ISO-Name: triclopyr) und deren Salzen und Estern, als ein Phytohormonherbizid (Gruppe B) mit einem N-(Phosphonomethyl)glycinat-Salz und Ablagern der Mischung auf einem mineralischen Träger mit einer Korngrößenverteilung von 0,1 bis 0,3 mm.

3. Herbizid, erhalten durch Mischen von einem oder zwei Mitgliedern ausgewählt aus der Gruppe bestehend aus Oxadiargyl (ISO-Name: oxadiargyl), Carfentrazon-ethyl (ISO-Name: carfentrazone-ethyl), Flumioxazin (ISO-Name: flumioxazin) und Pyraflufen-ethyl (ISO-Name: pyraflufen-ethyl), als ein Protoporphyrinogen-Oxidase-hemmendes Herbizid (Gruppe C) mit einem N-(Phosphonomethyl)glycinat-Salz und Ablagern der Mischung auf einem mineralischen Träger mit einer Korngrößenverteilung von 0,1 bis 0,3 mm.

4. Herbizid, erhalten durch Mischen von einem oder zwei Mitgliedern ausgewählt aus der Gruppe bestehend aus Glufosinat (ISO-Name: glufosinate-ammonium), Diflufenican (ISO-Name: diflufenican), Dichlobenil (ISO-Name: dichlobenil) und Chlorthiamid (ISO-Name: chlorthiamid), als anderes Herbizid (Gruppe D) mit einem N-(Phosphonomethyl)glycinat-Salz und Ablagern der Mischung auf einem mineralischen Träger mit einer Korngrößenverteilung von 0,1 bis 0,3 mm.

5. Herbizid, erhalten durch Mischen von je einem Mitglied ausgewählt aus zwei der Gruppen von (Gruppe A), (Gruppe B), (Gruppe C) und (Gruppe D) mit einem N-(Phosphonomethyl)glycinat-Salz und Ablagern der Mischung auf einem mineralischen Träger mit einer Korngrößenverteilung von 0,1 bis 0,3 mm.

6. Herbizid nach Anspruch 1, 2, 3, 4 oder 5, welches einen Haftvermittler enthält.

## Revendications

1. Herbicide obtenu par mélange d'un ou deux membres choisis dans l'ensemble constitué par l'isouron (nom ISO : isouron), le karbutilate (nom ISO : karbutilate), le diuron (nom ISO : diuron), le tébuthiuron (nom ISO : tebuthiuron), le linuron (nom ISO : linuron), la cyanazine (nom (ISO cyanazine), la prométryne (nom ISO : prometryn), la métribuzine (nom ISO : metribuzin), le terbacil (nom ISO : terbacil) et le bromacil (nom ISO : bromacil), en tant qu'herbicide inhibant la photosynthèse (Groupe A), avec un sel N-(phosphonométhyl)glycinate, et dépôt du mélange sur un support minéral ayant une distribution de granulométrie de 0,1 à 0,3 mm.

2. Herbicide obtenu par mélange d'un ou deux membres choisis dans l'ensemble constitué par le 2,4-D (nom ISO : 2,4-D), le MCPA (nom ISO : MCPA), le mécoprop (nom ISO : mecoprop), le triclopyr (nom ISO : triclopyr) et leurs sels et esters, en tant qu'herbicide de type phythormone (Groupe B), avec un sel N-(phosphonométhyl)glycinate, et dépôt du mélange sur un support minéral ayant une distribution de granulométrie de 0,1 à 0,3 mm.

3. Herbicide obtenu par mélange d'un ou deux membres choisis dans l'ensemble constitué par l'oxadiargyl (nom ISO : oxadiargyl), le carfentrazone-éthyl (nom ISO : carfentrazone-ethyl), la flumioxazine (nom ISO : flumioxazine) et le pyraflufen-éthyl (nom ISO : pyraflufen-ethyl), en tant qu'herbicide inhibant l'oxydase protoporphyrinogène (Groupe C), avec un sel N-(phosphonométhyl)glycinate, et dépôt du mélange sur un support minéral ayant une distribution de granulométrie de 0,1 à 0,3 mm.

4. Herbicide obtenu par mélange d'un ou deux membres choisis dans l'ensemble constitué par le glufosinate (nom ISO : glufosinate-ammonium), le diflufénican (nom ISO : diflufenican), le dichlobénil (nom ISO : dichlobenil) et le chlorthiamid (nom (ISO : chlorthiamid), en tant qu'autre herbicide (Groupe D), avec un sel N-(phosphonométhyl)glycinate, et dépôt du mélange sur un support minéral ayant une distribution de granulométrie de 0,1 à 0,3 mm.

5. Herbicide obtenu par mélange d'un membre choisi dans chacun de deux groupes parmi (Groupe A), (Groupe B), (Groupe C) et (Groupe D) avec un sel N-(phosphonométhyl)glycinate, et dépôt du mélange sur un support minéral ayant une distribution de granulométrie de 0,1 à 0,3 mm.

6. Herbicide selon la revendication 1, 2, 3, 4 ou 5, qui contient un auxiliaire d'adhérence.
